(19) **Europäisches Patentamt**
**European Patent Office**
**Office européen des brevets**

(11) **EP 1 630 980 B2**

(12) **NEUE EUROPÄISCHE PATENTSCHRIFT**
Nach dem Einspruchsverfahren

(45) Veröffentlichungstag und Bekanntmachung des
Hinweises auf die Entscheidung über den Einspruch:
**06.03.2013 Patentblatt 2013/10**

(45) Hinweis auf die Patenterteilung:
**04.11.2009 Patentblatt 2009/45**

(21) Anmeldenummer: **05017359.0**

(22) Anmeldetag: **10.08.2005**

(51) Int Cl.:
***H04B 7/26*** *(2006.01)*    ***G08C 17/02*** *(2006.01)*

(54) **Verfahren und Vorrichtung zur Übertragung von Daten mit zwei verschiedenen Sendemodi**

Method and device for transmission of data with two different modes of transmission

Procédé et dispositif de transmission de données par deux modes de transmission différents

(84) Benannte Vertragsstaaten:
**AT BE BG CH CY CZ DE DK EE ES FI FR GB GR
HU IE IS IT LI LT LU LV MC NL PL PT RO SE SI
SK TR**

(30) Priorität: **27.08.2004 DE 102004041421**

(43) Veröffentlichungstag der Anmeldung:
**01.03.2006 Patentblatt 2006/09**

(73) Patentinhaber: **Techem Energy Services GmbH
65760 Eschborn (DE)**

(72) Erfinder: **Hansing, Martin, Dipl.-Inf.
65931 Frankfurt am Main (DE)**

(74) Vertreter: **KEIL & SCHAAFHAUSEN
Patentanwälte
Cronstettenstraße 66
60322 Frankfurt am Main (DE)**

(56) Entgegenhaltungen:
WO-A-98/26518    WO-A2-01/48490
US-A- 5 438 329    US-A- 5 438 329
US-A- 5 923 269

EP 1 630 980 B2

**Beschreibung**

Die Erfindung betrifft ein Verfahren zur Übertragung von Daten, insbesondere bei der drahtlosen Fernauslesung von wohnungswirtschaftlichen Verbrauchsdaten oder Messwerten mittels Funkübertragung, mit Daten- bzw. Funktelegrammen, welche in mindestens zwei verschiedenen Sendemodi ausgesendet werden, gemäß dem Oberbegriff des Anspruchs 1. Ferner wird eine Vorrichtung zur Durchführung des Verfahrens gemäß dem Oberbegriff des Anspruchs 9 vorgeschlagen.

Für die Erfassung wohnungswirtschaftlicher Verbrauchsdaten werden zur Zeit zunehmend Funksysteme eingesetzt, die das Auslesen von Verbrauchswerten an den entsprechend Verbrauchsgeräten (Heizkörper, Stromzähler, Wasserzähler oder dergleichen) vereinfachen, da nicht mehr jedes Gerät einzeln abgelesen werden muss, Dabei werden die von den Verbrauchsgeräten erfassten Verbrauchsdaten über ein nicht drahtgebundenes, per se nicht kollisionsfreies Übertragungsmedium (nachfolgend als Funkübertragung bezeichnet) ausgesendet, um von entsprechenden Empfängern empfangen und für eine weitere Verarbeitung gespeichert zu werden. Obwohl die Erfindung besonders vorteilhaft bei der nicht drahtgebundenen Übertragung eingesetzt werden kann, eignet es sich auch für drahtgebundene Übertragungssysteme. Dies gilt insbesondere dann, wenn auch bei drahtgebundener Übertragung im Hinblick auf Datendichte und Übertragungsqualität die nachfolgend anhand eines Funkübertragungssystems beschriebenen Anforderungen bestehen.

Es werden derzeit sowohl stationäre als auch mobile Empfänger eingesetzt. Mit "mobiler Empfang" sind im Folgenden Systeme gemeint, bei denen der Funkempfänger frei beweglich ist. Bei einem solchen System geht der Ableser mit einem mobilen Empfänger durch ein Ablesegebiet und empfängt dabei die auszulesenden Verbrauchsdaten. Diese Verfahren sind beispielsweise für eine Funkfernablesung per "WALK-IN", "WALK-BY" und "DRIVE-BY" geeignet. Mit "stationärem Empfang" werden dagegen im Folgenden Systeme bezeichnet, deren Empfänger an einem festen Ort im Ablesegebiet angebracht ist, an welchem er die Funktelegramme mit den Verbrauchsdaten empfangen kann. Ein solcher stationärer Empfänger kann beispielsweise an einer frei zugänglichen Stelle in einem mit funkfähigen Verbraucherfassungsgeräten ausgestatteten Gebäude montiert werden, so dass eine Ablesung sämtlicher Verbrauchsdaten für das Gebäude zentral an diesem stationären Empfänger, beispielsweise mit nachgeschalteter drahtgebundener oder drahtloser Datenfernübertragung, erfolgen kann. Drahtlose Verbraucherfassungssysteme, die mit einem mobilen Empfänger abgelesen werden, eignen sich insbesondere für Liegenschaften, die relativ selten abzulesen sind, zum Beispiel einmal im Jahr. Systeme mit stationären Empfängern können dagegen dort wirtschaftlich eingesetzt werden, wo eine häufige Erfassung der Verbrauchswerte, beispielsweise ein- bis zweimal im Monat, wöchentlich oder täglich, erforderlich ist.

Die technischen Anforderungen für die Funkübertragung der Daten ist bei beiden Ablesemöglichkeiten jedoch sehr unterschiedlich. Die Sender für den mobilen Empfang sollten folgende Eigenschaften aufweisen: geringe Reichweite, hohe Sendehäufigkeit (zumindest im Ablesezeitraum) und kurze Funktelegramme bzw. Funkbotschaften. Die genannten Eigenschaften ergeben sich aus der hohen Senderdichte in größeren Gebäuden, dem Wunsch einer zügigen Ablesung bei einer Begehung vor Ort und der Notwendigkeit, die Eigenkollisionsrate der Funktelegramme auf dem Übertragungskanal auf einem niedrigen Niveau zu halten. Um eine zügige Ablesung mit einem mobilen Empfänger zu gewährleisten, müssen die Sender ihre Funktelegramme (Funkbotschaften) sehr häufig wiederholt aussenden. Die Größenordnung der Sendehäufigkeit liegt im Sekunden- bis Minutenbereich.

Ein stationärer Funkempfänger kann die Daten der ihm zugeordneten Sender dagegen über Tage oder Stunden empfangen, so dass hier deutlich größere Sendeintervalle ausreichend sind und der Funkkanal insgesamt weniger belastet wird. Hinzu kommt, dass Erfassungsgeräte, die nur selten mobil ausgelesen werden, in den einzelnen Funktelegrammen mehr Daten übertragen müssen, als Sender, die in kürzeren Intervallen mit stationären Empfänger abgelesen werden. Bei stationären System ist es also ausreichend, wenn die Sender nur solche Daten übertragen, die im Zeitraum zwischen zwei Sende- bzw. Empfangszeitpunkten anfallen. Ist zum Beispiel eine zeitliche Auflösung der Verbrauchswerte im Halbmonatsraster gefordert, muss ein Sender, dessen Daten einmal im Monat von einem stationären Empfänger empfangen und gespeichert werden, nur zwei Werte in einer monatlich variierenden Funkbotschaft übertragen. Ein Sender, der nur einmal jährlich mit einem mobilen Empfänger abgelesen wird, muss dagegen bei der gleichen zeitlichen Auflösung vierundzwanzig Halbmonatswerte in ein oder mehreren Funkbotschaften zum Zeitpunkt der Ablesung übertragen. Weiterhin bestehen bei mobilem bzw. stationärem Empfang unterschiedliche Anforderungen an die Systemdynamik. Für den Stationärempfang in einem Gebäude lässt sich bedingt durch Reflexionen und partielle Auslöschungen der Signale in der Regel kein Empfängerstandort bestimmen, der für alle Sender gute Empfangsbedingungen schafft.

Um auch bei ungünstigen Empfängerstandorten die Funkbotschaften sicher empfangen zu können, ist also eine viel höhere Systemdynamik zu veranschlagen als bei der mobilen Funkablesung, bei der durch Standortveränderungen des Empfängers immer wieder gute Empfangspositionen erreicht werden. Die Empfangsempfindlichkeit kann bei einen mobilen Empfänger dagegen deutlich geringer gewählt werden als bei einem stationären Empfänger. Aufgrund der vorbeschriebenen Anforderungen lassen sich die für eine mobile Funkablesung geeigneten Systeme wie folgt charakterisieren:

- geringe erforderliche Funkreichweite,
- hohe Sendehäufigkeit (insbesondere im Ablesezeitraum) und deswegen
- kurze Funktelegramme zur Vermeidung von Kanalüberlastungen,
- seltene Funkablesung und dadurch
- größere akkumulierte Datenmengen in jedem Funktelegramm bzw. jeder Funkbotschaft.

Um diese Merkmale technisch zu realisieren, wählt man bei mobilen Systemen daher hohe Übertragungsraten mit großen Bandbreiten auf Kosten der Empfängerempfindlichkeit. Funkbasierte Verbrauchserfassungssysteme, die mit einem stationären Empfänger arbeiten, weisen dagegen in der Regel folgende Eigenschaften auf:

- hohe Reserve bei der Funkreichweite, um ungünstige Empfängerstandorte zu kompensieren,
- geringe Sendehäufigkeit
- geringe Einschränkungen bei der Länge der Funkbotschaften,
- regelmäßige Funkablesung und dadurch
- geringere akkumulierte Datenmengen pro Funktelegramm bzw. Funkbotschaft.

Um diese Merkmale bei einem Funksystem mit stationärem Empfänger technisch zu realisieren, wählt man geringere Übertragungsraten mit kleinen Bandbreiten zu Gunsten einer hohen Empfängerempfindlichkeit.

Aufgrund dieser unterschiedlichen Anforderungen an Systeme mit stationärem und mobilem Empfänger waren die Systeme bisher in der Regel entweder auf einen mobilen oder einen stationären Empfang ausgelegt. Nachteilig ist hierbei, dass bei der Installation des Systems zur Fernablesung entschieden werden muss, ob der Empfang mit stationären oder mobilen Funkempfängern erfolgen soll, um die Sender zum Aussenden der Funktelegramme entsprechend einzurichten. Eine nachträgliche Veränderung der anfangs gewählten Ausstattungsvariante ist in der Regel später ohne ein Betreten der Wohnung oder ohne Umkonfiguration bzw. Austausch der Sender und/oder Erfassungsgeräte nicht möglich. Eine derartige Umstellung kann notwendig werden, wenn die Ableseintervalle beispielsweise auf Kundenwunsch nachträglich verkürzt werden sollen. Dann kann es sinnvoll sein, ein System, das auf eine einmal jährliche Ablesung mit einem mobilen Empfänger ausgelegt ist, in ein System mit stationären Empfänger umzuwandeln, das eine unterjährige, beispielsweise monatliche, wöchentliche oder tägliche Ablesung per Datenfernübertragung oder nachgeschaltetem Funknetzwerk gestattet.

Aus der DE 101 33 367 C2 ist ein Verbrauchszähler mit einer Funksendeeinrichtung zur Funkübertragung von Zählerstandsinformationen zu einem mobilen oder stationären Funkempfänger bekannt, bei dem die Funksendeeinrichtung zum Senden von Funktelegrammen wenigstens zweier unterschiedlicher Telegrammtypen vorbereitet ist. Der Verbrauchszähler arbeitet dabei zeitweise in einem für den Empfang mit stationären Funkempfangsgeräten optimierten Sendebetrieb und zeitweise in einem für dem Empfang mit einem mobilen Empfangsgerät optimierten Sendebetrieb, wobei jeweils ein anderer Funktelegrammtyp verwendet wird. Um die unterschiedlichen Anforderungen für den mobilen und den stationären Funkempfang erreichen zu können, unterscheiden sich die Funktelegrammtypen in der Sendeleistung, der Sendehäufigkeit und/oder der Funktelegrammlänge. Insbesondere ist von Bedeutung, dass die Funktelegramme für den stationären Empfang eine höhere Sendeleistung aufweisen. Dies wird technisch dadurch erreicht, dass die Funksendeeinrichtung eine Leistungsverstärker-Endstufe und eine Treiberstufe für die Leistungsverstärker-Endstufe aufweist, wobei Funktelegramme des ersten Funktelegrammtyps für den mobilen Empfang bei nicht aktivierter Leistungsverstärker-Endstufe nur über die Treiberstufe ausgesendet und Funktelegramme eines zweiten Funktelegrammtyps für den stationären Empfang über die Leistungsverstärker-Endstufe ausgesendet werden.

Nachteilig ist bei diesem Verbrauchszähler, dass eine zusätzliche Verstärkerstufe für die Aussendung der Funktelegramme für den stationären Empfang vorgesehen werden muss, die einen erheblich höheren Leistungsverbrauch bei den häufig batteriebetriebenen Funksendern der Verbrauchserfassungsgeräte verursacht und die Kosten für die Herstellung der Sender erhöht.

Aus der WO 01/48490 A2 ist ein Verbrauchserfassungsgerät bekannt, das einen Empfänger und einen Sender aufweist, die zur Funkübertragung mit unterschiedlichen Funkmodulationsschemata und unterschiedlichen Kommunikationsprotokollen auf einer Vielzahl unterschiedlicher Frequenzen eingerichtet werden können. Damit ist es möglich, ein Verbrauchserfassungsgerät an die verschiedenen Funkmodi unterschiedlicher Versorger anzupassen, wobei die Anpassung in der Regel einmal erfolgt.

Aufgabe der Erfindung ist es, den Sender bei der Übertragung von Daten auf einfache und kostengünstige Weise an die Erfordernisse der Übertragung sowohl für einen mobilen Empfänger mit hohen Datenraten als auch für einen stationären Empfänger mit hoher Übertragungsqualität anzupassen.

Diese Aufgabe wird mit den Merkmalen des Anspruchs 1 gelöst. Es ist vorgesehen, dass ein erster Sendemodus eine Kanalkodierung mit Spreizbandverfahren und ein zweiter Sendemodus eine Kanalkodierung ohne Spreizbandverfahren verwendet. Dabei wird der Sender vorzugsweise so ausgelegt, dass die Funk- bzw. Datentelegramme mit einem möglichst hohen Sendeschritttakt und damit verbundenen möglichst hohen Datenraten (nachfolgend auch Chipraten genannt) ausgesendet werden, um die Funk- bzw. Datentelegramme bei bestehendem Datenvolumen möglichst kurz ausgestalten zu können und die Zahl der Kollisionen in einem Übertragungskanal so weit wie möglich einzuschränken.

Die Sendeleistung und die Sendefrequenz des Senders sind in beiden Sendemodi gleich.

Für den mobilen Empfang werden die Funktelegramme dabei unter Ausnutzung der Bandbreite so redundanzarm wie möglich gestaltet. Dazu wird eine Kanalkodierung ohne Kodemultiplex verwendet. Im einfachsten Fall kann genau eine Bit-Dateninformation in genau einem Schritttakt verwendet werden. Es können bei der Datenübertragung jedoch auch gleichspannungsfreie oder gleichspannungsarme Kodierverfahren verwendet werden, bei denen die Bit-Informationen auf so viele Schritttakte (Chips) verteilt werden, dass ein in der Summe gleichspannungsfreies oder -armes Signal erhalten wird. Bekannte Kanalkodierungen sind zum Beispiel das Data-Whitening, welches eine bitweise Überlagerung des Nutzdatenstroms mit einem pseudozufälligen Binärstrom gleicher Taktrate darstellt, oder eine effiziente RLL-Kodierung, die zum Beispiel in der DE 101 48 275 A1 der Anmelderin beschrieben wurde. Bei einer effizienten Kanalkodierung entspricht die Anzahl der für die Übertragung der Daten verwendeten Schritttakte also im Wesentlichen der Anzahl der zu übertragenden Datenbits, wobei sich kleinere Unterschiede in der Anzahl der verwendeten Schritttakte und Datenbits insbesondere durch die Anforderung der Gleichspannungsfreiheit ergeben können. Durch die effiziente Ausnutzung der Schritttakte für die Übermittlung von Dateninformationen können vergleichsweise kurze Funktelegramme mit großen Datenmengen ausgesendet werden. Dies ermöglicht eine vergleichsweise hohe Sendehäufigkeit vorzugsweise in dem zur Ablesung vorgesehenen Ablesezeitraum, so dass die effiziente Kanalkodierung ohne Kodemultiplex die Anforderungen für den mobilen Empfang erfüllt.

Für den stationären Empfang verwendet der technisch gleiche Sender für die Aufbereitung der Funk- bzw. Datentelegramme ein Spreizbandverfahren nach dem Kodemultiplexprinzip, bei dem ein Datenbit als bestimmte, fest vorgegebene Folge von mehreren Sendeschritttakten (Chips) gesendet wird. Dabei können auch eine Gruppe von Datenbits für eine bestimmte Folge von Chips zusammengefasst werden. Bei dem Spreizband- bzw. Kodemultiplex-Verfahren wird ein zu übertragendes Datenbit einer großen Anzahl von Sendeschritttakten (Chips) in einer genau definierten Chipfolge bzw. -sequenz mit wechselnden Signalwerten, beispielsweise in einem bestimmten Rhythmus wechselnden Signalwerten von +1 und -1, zugeordnet. Diese Zuordnung wird als Spreizen bezeichnet.

In einem Korrelator des Empfänger wird das Eingangssignal erfindungsgemäß mit einer identischen Chipfolge wie bei dem Sender multipliziert und das resultierende Signal zur Entspreizung integriert, um den ursprünglichen Signalwert zu erhalten. Durch die empfangsseitige Entspreizung des Nutzsignals werden stochastisch verteilte, möglicherweise vorhandene Störsignal gleichzeitig gespreizt, so dass sie sich in dem Signalniveau des integrierten Signals nur wenig bemerkbar machen. Die Energie des Störsignals wird damit auf die volle Bandbreite verteilt, und entsprechend gering ist der Störanteil, der in die Bandbreite des Filters im Korrelator des Empfängers fällt. Anderseits wird das Nutzsignal entsprechend entspreizt, so dass dessen Energie vollständig in die Bandbreite des Filters im Korrelator fällt.

Auf diesem Effekt beruht der für Spreizbandverfahren (Spread-Spectrum-Verfahren) typische Prozessgewinn, der trotz möglicherweise vorhandener Störsignale zu einem insgesamt ausreichenden Empfang auch bei niedrigerer Funk- bzw. Übertragungsqualität führt, so dass durch das Spreizbandverfahren nach dem Kodemultiplexprinzip eine höhere Reichweite bei gleicher Sendeleistung erreicht werden kann. Daher ist dieser Sendemodus für den stationärem Empfang besonders geeignet, zumal im stationären Betriebsmodus in der Regel weniger Dateninformationen übertragen werden müssen und die Funk- bzw. Datentelegramme durch die Spreizung eines Datenbits daher keine übermäßig große Länge erhalten. Bei einem Spreizverfahren, das 32 Chips pro Datenbit verwendet, liegt der rechnerische oder theoretische Prozessgewinn durch die Anwendung des Kodemultiplexprinzips bei 15 Dezibel (dB), obwohl für beide Sendemodi der gleiche Sender, die gleiche Sendeleistung und die gleiche Sendefrequenz verwendet werden.

Um innerhalb der Steuereinheit eines Verbrauchserfassungsgeräts die gleichen Taktraten für mobilen und stationären Empfang verwenden zu können, arbeiten verschiedene, insbesondere alle Sendemodi mit einem identischen Sendeschritttakt (Chiprate), wobei vorzugsweise der maximale Sendeschritttakt ausgewählt wird. Bei Verwendung des gleichen Sendeschritttaktes ist das System in der Regel kostengünstiger zu realisieren, da die Bandbreite des Basisbandes unverändert bleibt und sich die Dimensionierung von Hochfrequenz-Schaltungsteilen vereinfacht. Daher ist es auch besonders vorteilhaft, wenn die Sendemodi, insbesondere der erste Sendemodus und der zweite Sendemodus oder alle Sendemodi, die gleiche Trägerfrequenz, Hochfrequenz-Trägermodulation und/oder Sendeleistung aufweisen.

Da die maximale Auslastung eines Funkkanals durch ein Funksystem häufig durch rechtliche Vorgaben festgelegt ist, ist es besonders vorteilhaft, wenn verschiedene oder alle Sendemodi eine zeitlich gleiche Funktelegrammlänge aufweisen, die durch eine bestimmte Anzahl von Sendeschritttakten (Chips) vorgegeben ist. Da bei den verschiedenen Sendemodi eine unterschiedliche Anzahl von Dateninformationen in einer vorgegebenen Anzahl von Chips untergebracht werden kann, wird dazu erfindungsgemäß die Anzahl der in den Funktelegrammen enthaltenen, zu übertragenden Dateninformationen variiert. Um möglichst viele Verbrauchsdaten in einem Funk- bzw. Datentelegramm für den mobilen und/oder stationären Empfang unterbringen zu können, kann erfindungsgemäß auch vorgesehen werden, die Verbrauchsdaten durch ein geeignetes Kompressionsverfahren zu verdichten. Ein besonders vorteilhaftes Kompressionsverfahren ist beispielsweise in dem deutschen Patent 103 09 455 der Anmelderin beschrieben, dessen Inhalt durch Bezugnahme in diese Anmeldung mit aufgenommen wird.

Insbesondere wenn die zu übertragenden Daten für einen Sendemodus nicht in die zeitlich vorgegebene Funk- bzw. Datentelegrammlänge integrierbar sind, kann erfindungsgemäß vorgesehen werden, dass die zu übertragenden Daten in mehrere Funk- bzw. Datentelegramme einer insbesondere fest vorgegebenen Funk- bzw. Datentelegrammsequenz aufgeteilt werden. Diese Funk- bzw. Datentelegramme werden dann in dem Empfänger entsprechend interpretiert, um die gewünschten Informationen wieder zusammen zu setzen.

Gemäß einer bevorzugten Ausgestaltung des erfindungsgemäßen Verfahrens können verschiedene Sendemodi zu verschiedenen Zeiten aktiviert und deaktiviert werden. Dadurch können geeignete Zeiträume festgelegt werden, in denen insbesondere eine mobile und/oder stationäre Ablesung erfolgen kann. Eine mobile Funkablesung von Verbrauchsdaten wird vorzugsweise tagsüber vorgenommen, während ein stationärer Empfang mit fest installierten stationären Empfängern auch nachts möglich ist.

Dafür ist es erfindungsgemäß von besonderem Vorteil, wenn die Aktivierung und Deaktivierung verschiedener Sendemodi nach einem Sendeschema erfolgt, bei dem ein sich zyklisch wiederholender Zeitabschnitt in Unterabschnitte für die jeweiligen Sendemodi aufgeteilt ist, beispielsweise einen Unterabschnitt für die Aussendung von Funkbotschaften für die mobile Ablesung und einen Unterabschnitt für die Aussendung von Funkbotschaften für die stationäre Ablesung.

Zwischen den jeweiligen Unterabschnitten können sendefreie Pufferzeiten liegen, um auch bei typischen Zeitgebertoleranzen eine Überschneidung von Zeit- bzw. Unterabschnitten mit verschiedenen Sendemodi zu vermeiden.

Dabei können die Dauer eines Unterabschnitts oder mehrere Unterabschnitte im Laufe der Zeit insbesondere schrittweise erhöht werden, um bei dem Auftreten von Zeitgebertoleranzen auch über einen längeren Zeitraum eine ausreichend große Überlappung der vorgesehenen Sendezeiträume in einem Sendemodus bei Sender und Empfänger vorzusehen. Um den sich zyklisch wiederholenden Zeitabschnitt dabei nicht zu verlängern, können die sendefreien Pufferzeiten schrittweise entsprechend vermindert werden.

Die Erfindung bezieht sich feiner auf eine entsprechende Vorrichtung zur Übertragung von Daten gemäß Anspruch 9, insbesondere ein Verbrauchserfassungsgerät zur drahtlosen Funkablesung von wohnungswirtschaftlichen Verbrauchsdaten mittels Funkübertragung, mit einem Speicher, in welchem die zu übertragenden Daten gespeichert sind, einer Steuereinheit zur Verarbeitung der Daten zu Funktelegrammen und einem Sender. Die Steuereinheit ist dabei erfindungsgemäß zur Durchführung des vorbeschriebenen Verfahrens eingerichtet, indem sie entsprechend Anspruch 9. einen Kanalkodierer und Signalformer ohne Spreizbandverfahren, einen Signalformer und einen Sequenzgenerator für eine Kanalkodierung mit Spreizbandverfahren und einen von der Steuereinheit gesteuerten Signalmultiplexer aufweist, welcher die Kanalkodierung mit oder ohne Spreizung dem Sender zuleitet. Ferner kann ein erfindungsgemäßes System zu mobilen und/oder stationären Fernablesung von Daten mindestens einen mobilen und/oder stationären Empfänger aufweisen, welcher zumindest einen erfindungsgemäßen Sendemodus, in welchem der Sender die Daten aussendet, empfangen und auswerten kann. Ein stationärer Empfänger kann dabei zum Empfang von spreizbandkodierten Nachrichten bzw. Datentelegrammen und ein mobiler Empfänger zum Empfang von nicht spreizbandkodierten Nachrichten eingerichtet sein.

Weitere Merkmale, Vorteile und Anwendungsmöglichkeiten der Erfindung ergeben sich auch aus der nachfolgenden Beschreibung von Ausführungsbeispielen und der Zeichnung.

Es zeigen:

Fig. 1     schematisch eine erfindungsgemäße Vorrichtung zur Funkübertragung von Daten mit zwei Sendemodi;

Fig. 2     ein Prinzipschaltbild eines stationären Empfängers zum Empfangen der von der Vorrichtung gemäß Fig. 1 ausgesendeten Daten;

Fig.3     den Prozessgewinn bei der Übertragung von Daten nach dem erfindungsgemäßen Verfahren in einem Sendemodus im Spreizbandverfahren nach dem Kodemultiplexprinzip;

Fig. 4     eine Autokorrelations- und Kreuzkorrelationsfunktion für ein Spreizbandverfahren nach dem Kodemultiplexprinzip;

Fig. 5     ein erfindungsgemäßes Sendeschema für die zeitliche Abfolge der verschiedenen Sendemodi;

Fig. 6     ein Sendeschema für die verschiedenen Sendemodi auf Tagesbasis;

Fig. 7     eine tabellarische Übersicht über die zulässige Einsatzzeit bei einer Pufferzeit von vier Stunden und

Fig. 8     eine tabellarische Übersicht über die zulässige Einsatzzeit bei einer Pufferzeit von sieben Stunden.

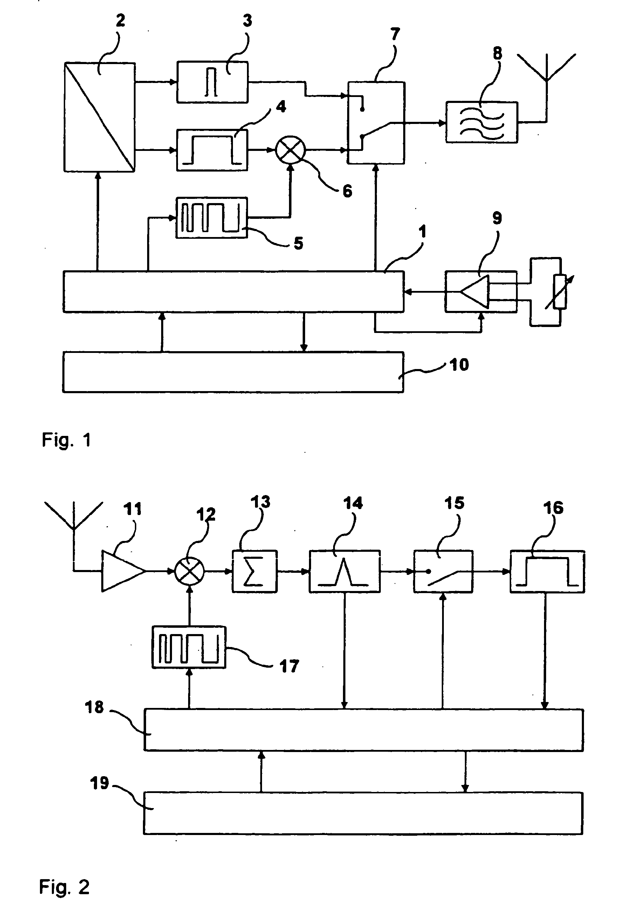

Die in Fig. 1 dargestellte Vorrichtung zur drahtlosen Übertragung von Daten insbesondere über Funk weist eine Steuereinheit 1 auf, an die eine Messwerteerfassung 9 mit Sensoren zur Erfassung von Verbrauchswerten, ein Speicher 10 zum Speichern insbesondere der Verbrauchswerte und ein Sender 8 zum Aussenden der Verbrauchswerte angeschlossen sind. Bei dem Sender 8 handelt es sich um einen Hochfrequenz-Sender mit Modulator und Antenne. Die vorliegende Erfindung ist jedoch nicht auf ein Verbrauchserfassungsgerät zur Fernauslesung von wohnungswirtschaftlichen Verbrauchsdaten beschränkt, sondern kann allgemein bei der Übertragung von Messwerten oder Daten Anwendung finden, die in verschiedenen Empfangsarten insbesondere sowohl von stationären als auch von mobilen Empfängern empfangen werden sollen. Dies gilt auch für eine drahtgebundene Übertragung.

Die Steuereinrichtung 1 verarbeitet die ihr von der Messwerteerfassung 9 zugeleiteten Messwerte und speichert sie als zu übertragende Daten in dem Speicher 10. Zur Aussendung der Daten stellt die Steuereinheit Funktelegramme mit den zu versendenden Informationen zusammen, die insbesondere die Verbrauchswerte, aber auch weitere Angaben wie eine Geräteidentifikation, eine Zeitangabe oder dgl., enthalten können. Femer bereitet die Steuereinrichtung 1 die zu übertragenden Daten zur Übertragung durch den Sender 8 vor und leitet sie diesem zu. Dabei verwendet die Steuereinrichtung 1 zwei verschiedene Sendemodi, die einmal für einen stationären und einmal für einen mobilen Empfang optimiert sind.

Die Sender 8 sollen für den mobilen Empfang eine ausreichende, aber geringe Reichweite aufweisen, da die mobilen Ablesegeräte während des Ablesens in die Nähe der Sender 8 gebracht werden. Weil eine solche manuelle Auslesung in der Regel vergleichsweise selten stattfindet, sollten kurze Funktelegramme mit hoher Sendehäufigkeit im Ablesezeitraum und größeren Datenmengen übertragen werden, so dass alle relevanten Informationen in einem oder wenigen aufeinanderfolgenden Funktelegrammen enthalten sind.

Die gleichen Sender 8 sollen bei Verwendung von stationären Empfängern eine hohe Reichweite aufweisen, um auch entfernter angeordnete Empfänger erreichen zu können. Bei geringer Sendehäufigkeit können mehrere kurze oder ein längeres Funktelegramm mit geringen Datenmengen ausgesendet und die Informationen im stationären Empfänger gesammelt werden.

Für besonders wirtschaftlich realisierbare Gerätekomponenten sollen ferner der gleiche Sendeteil, die gleiche Sendeleistung und die gleiche Sendefrequenz für beide Betriebsarten (Mobil-/Stationärempfang) verwendet werden. Um die Anforderungen zu erfüllen, wird der Sender 8 so ausgelegt, dass er in der Lage ist, mit möglichst hohen Datenraten (Chipraten) zu operieren, indem ein gewünschter Sendeschritttakt für den Sender 8 vorgegeben wird.

Für den mobilen Empfang werden die Funkbotschaften unter Ausnutzung der Bandbreite so redundanzarm wie möglich gestaltet. Dazu wird eine Kanalkodierung gewählt, wie zum Beispiel Data-Whitening (bitweise Überlagerung des Nutzdatenstroms mit einem pseudozufälligen Binärstrom gleicher Taktrate), eine effiziente RLL-Kodierung oder ein anderes, gleichspannungsfreies bzw. gleichspannungsarmes Kodierverfahren, bei dem ein zu übertragendes Datenbit im wesentlichen einem oder wenigen Sendeschritttakten (Chips) zugeordnet wird. Dadurch wird auf eine hohe Redundanz und Störsicherheit verzichtet. Aufgrund der kurzen Sendezyklen bei einem mobilen Empfang, die es erlauben, ein Funktelegramm mehrfach zu empfangen, ist dies ohne Probleme möglich. Andererseits werden die für die Datenübertragung im Übertragungskanal zur Verfügung stehenden Chips sehr effizient für die Übertragung inhaltlicher Informationen verwendet, weil (fast) jeder Chip eine inhaltliche Information überträgt.

Für die Übertragung wird ein von der Steuereinheit 1 zusammengestelltes Funktelegramm einem Parallel-/Serienwandler 2 zugeleitet, welcher das Funktelegramm in eine Folge von zeitlich aufeinanderfolgenden Signalen zerlegt. Diese Signalfolge wird in einem Kanalkodierer und Signalformer 3 für Funktelegramme für die mobile Ablesung, welcher die Chiprate vorgibt, in zu übertragende Signale übersetzt und über einen von der Steuereinheit 1 geschalteten Signalmultiplexer 7 zur Betriebs- bzw. Sendemodusumschaltung mobil/stationär dem Sender 8 zugeleitet. In dem Kanalkodierer 3 wird die effiziente Kanalkodierung für die mobile Ablesung angewendet.

Für den stationären Empfang wird nun der gleiche Sender 8 mit der gleichen Chiprate verwendet. Vorzugsweise wird man für den Stationärempfang und den Mobilempfang die gleiche, durch Randbedingungen vorgegebene maximale Chiprate verwenden, um möglichst identische elektronische Bauteile einsetzen zu können.

Die höhere Reichweite im stationären Betrieb wird erfindungsgemäß durch ein Spreizbandverfahren erreicht. Verfahren zur Bandspreizung (Spread Spectrum), die trotz hohem Bandbreitenbedarfs eine gute Störunterdrückung bieten, sind beispielsweise Zeitmultiplex (TDM = Time Division Multiplex), Frequenzmultiplex (z. B. FH = Frequency Hopping) oder Kodemultiplex (CDM = Code Division Multiplex). Koordinierte Zeit- und Frequenzmultiplexverfahren lassen sich typischerweise nur in bidirektionalen Systemen sinnvoll einsetzen, da ein Synchronisationsmechanismus implementiert werden muss. Funkablesbare Verbrauchserfassungsgeräte weisen häufig nur einen Sendeteil auf und verzichten aus Kostengründen auf einen Funkempfänger. Ein Synchronisationsverfahren ist somit auf Seite der Erfassungsgeräte nicht machbar.

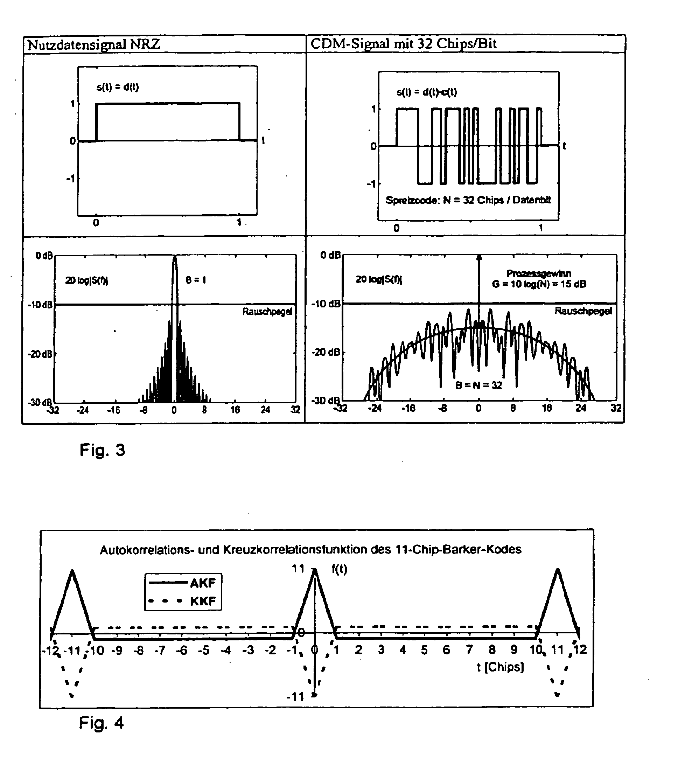

Nach dem Kodemultiplexprinzip wird dagegen jedes einzelne Datenbit oder eine Gruppe von Datenbits als eine bestimmte Folge von mehreren Chips gesendet. Dies ist in der ersten Zeile von Fig. 3 dargestellt, die ein Nutzdatenbit zeigt, das im Spreizbandverfahren nach dem Kodemultiplexprinzip mit einer Chipfolge von zweiunddreißig Chips multipliziert wird. Anstelle eines Chips mit der Nutzdateninformation werden zweiunddreißig Chips mit vorgegebenen Datenwerten übertragen.

Dies geschieht in der Steuereinheit 1 durch Formung der Nutzdateninformation in einem Signalformer 4 für Funktelegramme für die stationäre Ablesung als ein Signal mit der 32-fachen Chiplänge. Dieses Signal wird mit der vorgegebenen Chipsequenz aus zweiunddreißig Chips von einem CDM-Sequenzgenerator 5 in einer Multipliziereinheit 6 durch Multiplikation der beiden Signale überlagert. Das derart erzeugte Signal wird über den Signalmultiplexer 7 dem Sender 8 zugeleitet und von dem Empfänger entsprechend interpretiert. Dabei können die Steuereinheit 1, der Parallel-/Serienwandler 2, der Kanalkodierer und Signalformer 3, der Signalformer 4, der Sequenzgenerator 5, die Multipliziereinheit 6 und/oder der Signalmultiplexer 7, die in der Zeichnung zur Verdeutlichung der Funktionen als verschiedene Funktionseinheiten dargestellt sind, in einer oder mehreren elektronischen Einheiten, insbesondere einem Mikroprozessor, zusammengefasst sein.

Der Prozessgewinn G, der sich aus diesem Spreizband-Verfahren ergibt, hängt von dem Verhältnis der Chipdatenrate zu der Nutzdatenrate ab:

$$G[dB] = 10 \times \log\left(\frac{Chipdatenrate[Chip/s]}{Nutzdatenrate[Bit/s]}\right)$$

Kodiert man beispielsweise ein Bit in einer Folge von zweiunddreißig Chips, ergibt sich bei geeigneter Wahl der Chipfolge ein rechnerischer Prozessgewinn von:

$$G[dB] = 10 \times \log\left(\frac{Chipdatenrate[Chip/s]}{Nutzdatenrate[Bit/s]}\right) = 10 \times \log\left(\frac{32[Chip]}{1[Bit]}\right) \approx 15[dB]$$

Der Prozessgewinn ist in der unteren Zeile von Fig. 3 dargestellt.

Um den Prozessgewinn nutzbar zu machen, benötigt der stationäre Funkempfänger einen Korrelator, in dem das Eingangssignal nach einer Einregelphase chipsequenzsynchron mit einer identischen Chipfolge bzw. -sequenz wie beim Sender 8 multipliziert und das resultierende Signal integriert wird. Dazu weist der in Fig. 2 dargestellte Empfänger eine Steuereinheit 18 mit einer Speichereinheit 19 und einem Empfänger 11 mit einem Hochfrequenz-Eingangsverstärker auf. Das empfangene Signal wird in einer Multipliziereinheit 12 mit der beim Versenden verwendeten Chipfolge aus einem CMD-Sequenzgenerator 17 multipliziert und anschließend in einem Integrator 13 aufsummiert bzw. integriert. Über einen mit der Steuereinheit 18 zusammenwirkenden Synchrondetektor 14 und einen von der Steuereinheit 18 gesteuerten Schalter 15 wird in einem Regenerator 16 das Nutzdatensignal rekonstruiert und von der Steuereinheit 18 weiterverarbeitet und/oder in der Speichereinheit 19 für eine spätere Verwendung abgespeichert.

Durch die empfangsseitige Entspreizung des Nutzsignals werden vorhandene Störsignale gespreizt. Die Energie des Störsignals wird damit auf die volle Bandbreite verteilt und entsprechend gering ist der Störanteil, der in die Bandbreite des Filters im Korrelator fällt. Andererseits wird das Nutzsignal entspreizt, so dass dessen Energie vollständig in die Bandbreite des Filters im Korrelator fällt. Auf diesem Effekt beruht der für Spread-Spektrum-Verfahren typische Prozessgewinn.

Um die Sender- und Empfängerlogik möglichst einfach zu halten, ist es wünschenswert, jedes Nutzdatenbit mit einer identischen Chipfolge zu multiplizieren. Geeignete Folgen sind bspw. sogenannte "Goldfolgen" oder "Barkerfolgen", da diese günstige Korrelationseigenschaften aufweisen. Verwenden alle Sender die gleiche Chipfolge, dann ist im Wesentlichen deren Autokorrelationsfunktion (AKF) eine bestimmende Größe. Die Autokorrelationsfunktion für ein periodisches Signal s(t) mit der Periode T berechnet sich zu:

$$f_{AKF}(\tau) = \frac{1}{T} \int_{-T/2}^{T/2} s(t) \cdot s(t + \tau)\,dt$$

Die Autokorrelationsfunktionen geeigneter Kodefolgen weisen nur ein Maximum auf, wenn die Kodefolge mit sich selbst in Phase ist. Zudem ist es wünschenswert, dass die gewählte Chipfolge näherungsweise gleichspannungsfrei ist. Eine Sequenz mit den gewünschten Eigenschaften ist beispielsweise der aus der IEEE 802.11 bekannte 11-Chip- Barker-Kode 10110111000. Weist man der binären 0 den Signalwert -1 zu, dann erhält man die in Fig. 4 dargestellte Autokorrelationsfunktion (AKF) bzw. Kreuzkorrelationsfunktion (KKF) mit der invertierten Folge. Chipfolgen mit der gezeigten Eigenschaft sind für die Verarbeitung mit einem Korrelationsempfänger geeignet.

Die Verbrauchsdaten können zusätzlich durch ein geeignetes Kompressionsverfahren verdichtet werden. Ein bekanntes Verfahren zur Datenreduktion bildet beispielsweise aus numerischen Daten eine Kette von Differenzwerten, wobei die Differenzwerte über einen gemeinsamen Normierungsfaktor auf eine verkürzte binäre Darstellung skaliert werden.

Um nach einer Installation der Sender 8 im Gebäude beide Ablese- bzw. Sendemodi zu ermöglichen, also mit mobilen Empfängern oder mit stationären Empfängern, wird dem schaltbaren Kodemultiplexverfahren zur Reichweitensteuerung ein Zeitmultiplexverfahren zur Betriebsmodussteuerung überlagert. In Zeiträumen, in denen eine mobile Ablesung stattfinden kann, werden kurze Funktelegramme in kurzen Sendeintervallen im zweiten Sendemodus mit einer effizienten Kanalkodierung gesendet. Kurze Funktelegramme erreicht man im mobilen Ablesefall durch Weglassen der CDM-Kodierung unter Ausnutzung der vollen Bandbreite für die Datenübertragung. Außerhalb der Zeitabschnitte möglicher mobiler Ablesungen wird durch eine Zeitsteuerung der Sender für die Übertragung der Funktelegramme für mobile Empfänger abgestellt oder deren Übertragungshäufigkeit gedrosselt, und das Verfahren zur Übertragung der reichweitenoptimierten, kodemultiplexkodierten Funktelegramme für stationäre Empfänger entsprechend dem ersten Sendemodus gestartet.

Der Sender 8 eines batteriebetriebenen Verbrauchserfassungsgeräts lässt sich besonders preiswert gestalten, wenn auf eine Ladungspumpe für den erhöhten Sendestrombedarf verzichtet werden kann und stattdessen eine Direktpufferung in Form eines Stützkondensator parallel zur Batterie verwendet wird. Vorteil dieser Schaltungsvariante ist, dass keine Wandlerverluste zu Buche schlagen und so die zur Verfügung stehende Batteriekapazität besser ausgenutzt wird. Der dabei zur Verfügung stehende, vergleichsweise geringe Spannungshub lässt nur eine begrenzte Pufferzeit für die Speisung des Senders 8 zu. Das bedeutet, dass die Länge der Funkbotschaften bei dieser Schaltungsvariante limitiert und in der Regel auf die Bedürfnisse der mobilen Funkablesung mit kurzen Funkbotschaften ausgelegt ist. Legt man bei gleicher Chiprate eine CDM-Kodierung (Kodemultiplexkodierung) über das Funktelegramm, dann reduziert sich die übertragbare Datenmenge um den Faktor, der dem Verhältnis aus Chips pro Bit entspricht (vgl. auch Fig. 3)

Ein Zahlenbeispiel soll die Zusammenhänge verdeutlichen. Angenommen, ein stützkondensatorgepufferter Sender kann maximal 10 ms lange Funkbotschaften mit 100 kChip/s senden, dann beträgt die Bruttofunktelegrammlänge genau 1000 Chips. Zieht man ca. 10% für die Synchronisationsphase ab, dann bleiben 900 Chips für die Datenübertragung. Nutzt man nun noch eine garantiert gleichspannungsfreie Kanalkodierung, wie zum Beispiel eine 3-aus-6-Kodierung, bei der 4 Bit Nutzdaten in 6 Chips kodiert werden, dann stehen für die Datenübertragung 900 Chips x 4/6 = 600 Bit bzw. 75 Byte zur Verfügung. Dies ist bei effizienter Kodierung der Nutzdaten im Funktelegramm ausreichend.

Unter Verwendung des oben gezeigten 11-Chip-Barker-Kodes ergibt sich bei ansonsten gleichen Bedingungen für die stationären Funkbotschaften folgendes Bild: Es stehen 900 Chips bei 11 Chips pro Bit = 81 Bit oder 10 Byte für die Datenübertragung zur Verfügung. Das kann für die Übertragung aller in einem stationären Ablesintervall anfallenden Daten zu wenig sein. Deswegen wird in einer Variante des erfindungsgemäßen Verfahrens vorgeschlagen, die zu übertragenden Daten mit einer Multitelegrammsequenz an die stationären Empfänger zu übertragen. Dabei setzen sich die einzelnen Funktelegramme der Multitelegrammsequenz aus drei essentiellen Bestandteilen zusammen: einer mindestens für das Empfangsgebiet eindeutigen Geräteidentifikation, einer Sequenznummer und einem Nutzdatenteil. Eine Identifikation der Sender 8 über ihre Sendezeitpunkte ist bei dieser Art von Applikation nicht vorteilhaft einsetzbar, da die Zeitgeberungenauigkeiten typischer Geräte über die Lebensdauer einige Stunden betragen kann und eine Synchronisation aufgrund der Unidirektionalität der Funkverbindung nicht möglich ist. Bleibt man bei dem Zahlenbeispiel, so könnte man zum Beispiel 5 Byte (40 Bit) für eine eindeutige Identifikation der Geräte verwenden, das entspricht $2^{40}$ = 1,1 x $10^{12}$ unterscheidbaren Sendern. Wählt man 4 Bit für die Sequenznummer, dann könnten damit bis zu $2^4$ = 16 Funktelegramme verkettet werden. Es bleiben 36 Bit pro Funktelegramm zur Nutzdatenübertragung übrig, so dass insgesamt max. 16 x 36 Bit = 72 Byte pro Multitelegrammsequenz übertragen werden können. Damit steht im stationären Anwendungsfall ein Nutzdatenvolumen in etwa gleicher Größenordnung zur Verfügung wie bei dem mobilen Empfang.

Die in der Steuereinheit 1 der Sender und der Steuereinheit 18 der stationären Empfänger integrierten Zeit- und Taktgeber weisen Zeitgebertoleranzen auf. Zum Ausgleich dieser Zeitgebertoleranzen von Sendern und stationären Empfängern wird davon ausgegangen, dass die Zeitgeber der Sender alterungs-, fertigungs- und temperaturbedingten Abweichungen unterliegen. Typischerweise enthalten die Verbrauchserfassungsgeräte von einer Schwingquarzfrequenz abgeleitete Zeitgeber. Die Toleranzen solcher Schwingquarze liegen typischerweise in der Größenordnung < 100ppm, also bei maximal etwa 53 Minuten pro Jahr. Je länger die Gesamtbetriebsdauer solcher Geräte ist, umso geringer muss die zulässige Gangabweichung der eingesetzten Schwingquarze gewählt werden.

Für die stationären Empfänger kann aufgrund der geringeren Stückzahlen ein hochwertigerer Zeitgeber mit Temperaturkompensation (TCXO) oder ein Zeitzeichenempfänger (DCF77 o. ä.) eingesetzt werden. Für die stationären Empfänger werden daher deutlich kleinere Abweichungen der Zeitgeber veranschlagt als bei den kostensensitiveren Verbrauchserfassungs- bzw. Messgeräten. Für die mobilen Empfänger müssen Zeitgebertoleranzen nicht betrachtet werden, da ihr Betrieb in der Regel nicht zeitgesteuert erfolgt.

Eine Zeitsteuerung in den Sendern und den stationären Empfängern soll für eine Verbrauchswertablesung folgende Ableseszenarien ermöglichen: 1 bis 7 Tage pro Woche mobiler Empfang zu ausgewählten Tageszeiten. Optional wird zusätzlich unterschieden zwischen einem Zeitraum mit hoher und niedriger Sendehäufigkeit, abhängig von der Wahrscheinlichkeit einer mobilen Ablesung. Ein typischer Anwendungsfall sieht zum Beispiel vor, dass nach einem programmierbaren Stichtag abrechnungsrelevante Daten vorliegen und in der Zeit nach dem Stichtag eine mobile Ablesung stattfindet. Der Zeitraum nach Erreichen des Stichtages kann beispielsweise einige Tage, Wochen oder Monate betragen, je nach dem, wie häufig ableserelevante Stichtagswerte erzeugt werden. In diesem Zeiträumen sollen die Funkbotschaften für den mobilen Empfang in kurzen Zeitabständen gesendet werden. Außerhalb dieser für eine mobile Ablesung bevorzugten Zeiträume soll die Häufigkeit der Funkaussendung reduziert sein. Dieses Verfahren vermeidet einen unnötig hohen Sendestrombedarf bei den mehrheitlich batteriebetriebenen Mess- und Sendegeräten.

Bevorzugt wird ein Sendeschema, das die Überschneidung von Zeitabschnitten zur Aussendung von Funkbotschaften für den Empfang mit einem mobilen Empfänger und den Empfang mit einem stationären Empfänger weitgehend vermeidet. Diese zeitliche Separierung der Funkablesemodi ist deswegen günstig, weil bei einer großen Anzahl von Sendern und einer hohen Sendehäufigkeit in Zeiträumen mobiler Ablesungen der Funkkanal stark belastet wird und die Eigenkollisionsrate der Funkbotschaften zu Reichweiteneinbußen führt. Für den stationären Empfang wird aber ein möglichst ungestörter Übertragungskanal benötigt, um hohe Reichweiten erzielen zu können.

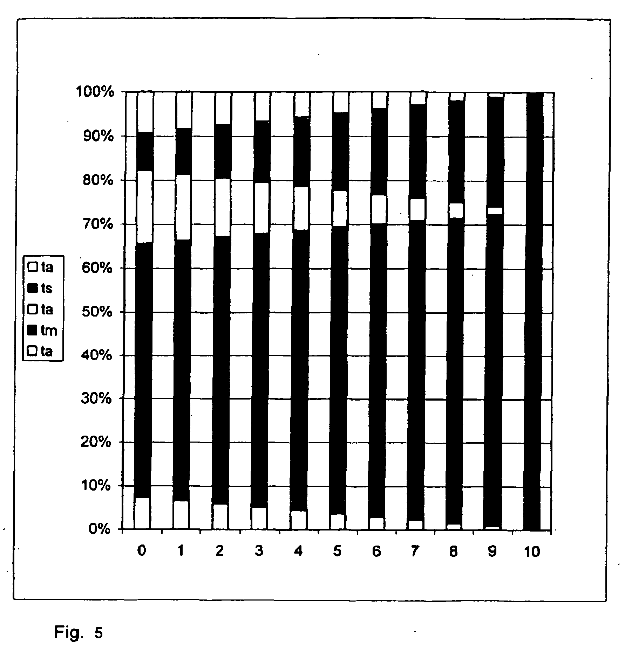

Dazu werden sich zyklisch wiederholende Zeit- bzw. Unterabschnitte $t_m$ für die mobile Ablesung und sich ebenfalls zyklisch wiederholende Zeit- bzw. Unterabschnitte $t_s$ für die Ablesung mit stationären Empfängern definiert. Zwischen diese alternierenden Zeitabschnitten $t_m$ und $t_s$ werden Pufferzeiten $t_a$ zum Ausgleich von Gangabweichungen der Zeitgeber eingefügt. Die Pufferzeiten $t_a$ werden dabei so gewählt, dass sie durch Zeitgebertoleranzen am Ende der Lebensdauer höchstens vollständig aufgebraucht sind. in diesem Sinne aufgebraucht meint, dass die Sendezeitabschnitte $t_m$ und $t_s$ kontinuierlich vergrößert werden, wobei sich die zwischen $t_m$ und $t_s$ liegenden Pufferzeiten $t_a$ entsprechend reduzieren, so dass eine vorgegebene Gesamtzyklusdauer $t_z$ unverändert bleibt. Die Gesamtzyklusdauer $t_z$ kann beispielsweise einen Tag, eine Woche einen Monat oder ein Jahr betragen. Ein entsprechendes Sendeschema ist in Fig. 5 für eine Einsatzzeit von 10 Jahren dargestellt. Die Prozentangabe bezieht sich auf den Anteil an der Gesamtzyklusdauer $t_z$.

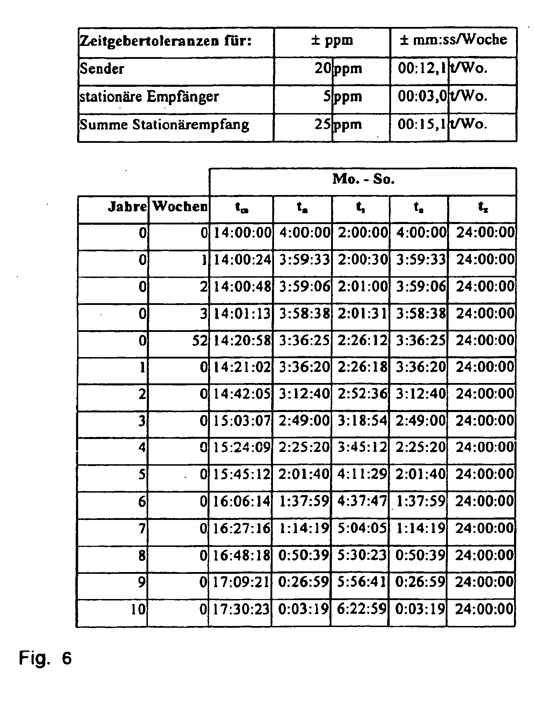

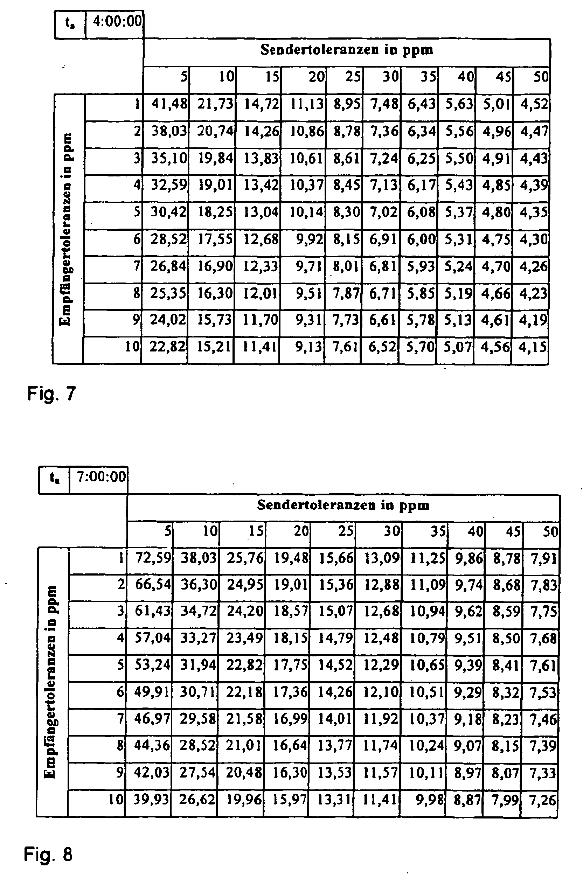

Exemplarisch wird in Fig. 6 ein Sendeschema auf Tagesbasis angegeben, wobei die Spalten "Jahre" und "Wochen" die Einsatzdauer in Jahren plus Wochen meint. Die einzelnen Zeit- bzw. Unterabschnitte $t_s$, $t_m$ und Pufferzeiten $t_a$ sind jeweils in Stunden abgeben. Eine Übersicht über die zulässige Einsatzzeit in Jahren ohne Überschneidung der Sendezeitabschnitte $t_m$ und $t_s$ für verschiedene Zeitgebertoleranzen und gegebener Pufferzeit $t_a$ (4h) ist Fig. 7 zu entnehmen.

In dem Beispiel stehen anfangs täglich $t_m$ = 14 Stunden für die mobile Ablesung zur Verfügung; es folgen $t_a$ = 4 Stunden Sendepause; darauf folgen $t_s$ = 2 Stunden für die stationäre Ablesung und wiederum $t_a$ = 4 Stunden Sendepause. Damit beträgt die Zykluszeit $t_z$ = 24 Stunden bzw. genau einen Tag. Der stationäre Empfänger schaltet sich in diesem Beispiel zu ausgewählten Zeitpunkten nur für maximal die anfängliche Sendezeit $t_s$ ein, hier also maximal für 2 Stunden. Der Empfänger vergrößert seine Empfangsfenster über die Einsatzdauer nicht, da der Empfängerstrombedarf bei Batteriebetrieb eine kritische Größe darstellt. Optional kann das zeitgesteuerte Einschalten des Empfängers auf wenige, an die Ablesehäufigkeit angepasste Zeitabschnitte $t_s$ reduziert werden, um den Strombedarf der Empfänger weiter zu senken.

Die Zeitgebertoleranzen des stationären Empfängers werden in diesem Vorschlag komplett von dem Sendeschema aufgefangen. Dazu werden die Sendezeitabschnitte $t_s$ für die stationäre Ablesung schrittweise über die Einsatzdauer vergrößert und zwar um den Betrag, der sich aus den kumulierten maximalen Zeitgebertoleranzen von Sender und Empfänger ergibt.

In einer alternativen Variante des Verfahrens, zum Beispiel wenn der Empfängerstrombedarf unkritisch ist, können die Sendezeitabschnitte $t_s$ für die stationäre Ablesung konstant gewählt werden. Das Empfangsfenster wird dabei sukzessive über die Einsatzdauer des Systems so vergrößert, dass die Sendezeitabschnitte $t_s$ inkl. aller Zeitgebertoleranzen von Sender und Empfänger darin Platz finden. Für die Sendezeitabschnitte $t_m$ der mobilen Ablesung müssen Zeitgebertoleranzen weiterhin berücksichtig werden, da die mobile Ablesung sich an absoluten Zeiten orientiert. Die Sendezeitabschnitte $t_m$ müssen also abhängig von den Toleranzen der Senderuhren über die Einsatzdauer angepasst werden.

In einer weiteren alternativen Variante wird eine Mischung der beiden Vorgehensweisen zum Ausgleich von Zeitgebertoleranzen vorgeschlagen, bei der sowohl die Empfangsfenster des stationären Empfängers als auch die Sendezeitabschnitte $t_s$ für die stationäre Ablesung kontinuierlich erweitert werden. Das Verfahren für die Anpassung der Sendezeitabschnitte $t_m$ der mobilen Ablesung bleibt davon aus den oben genannten Gründen unbeeinflusst.

Ist eine bestimmte Einsatzdauer in Jahren vorgegeben, und stehen die minimalen Zeitgebertoleranzen fest, dann können mitunter über eine Variation der Pufferzeiten $t_a$ die an das System gestellten Anforderungen erfüllt werden. Wählt man zum Beispiel zwei siebenstündige Pufferzeiten, zwei Stunden für die stationäre Ablesung und die verbleibenden acht Stunden täglich für die mobile Ablesung, dann ergeben sich für die unterschiedlichen Taktgebertoleranzen die aus Fig. 8 ersichtlichen Einsatzzeiten in Jahren.

Alternativ können ein oder mehrere ausgewählte Wochentage für die stationäre Ablesung reserviert werden, z. B. der Sonntag, und die anderen Wochentage bleiben der mobilen Ablesung vorbehalten. Durch ein gröberes Zeitraster lassen sich die Pufferzeiten $t_a$ zwischen den Sendeabschnitten $t_m$ und $t_s$ nochmals vergrößern, so dass sich sehr lange Einsatzzeiten erreichen lassen und/oder sehr preiswerte Schwingquarze mit geringer Ganggenauigkeit als Zeitgeber verwendet werden können.

Baut man auf bereits vorhandenen Komponenten für die Verbrauchsdatenerfassung mit mobilen Empfängern auf, lässt sich das erfindungsgemäße Verfahren zur Funkübertragung von Daten für den stationären Empfang ohne Änderungen der Hardware einsetzen. Alle Merkmale der stationären Variante sind mit den Merkmalen der mobilen Variante verträglich. Es können die gleiche Übertragungsrate, die gleiche Funktelegrammlänge, die gleiche HF-Modulationsart und die gleiche Sendeleistung verwendet werden. Der Reichweitengewinn beim Stationärempfang wird ausschließlich durch die Verwendung einer Spreizbandkodierung erreicht. Sie kann ohne Hardwaremodifikation als reine Software-Lösung in den Steuereinrichtungen der Geräte implementiert werden. Dies ist mit geringem Aufwand möglich.

Durch die vorgeschlagene, insbesondere zeitgesteuerte Betriebsart- bzw. Sendemodusumschaltung ist bei der Installation der Geräte keine Festlegung auf eine Ableseart notwendig. Die Messgeräte können jederzeit sowohl mit einem mobilen Funkempfänger als auch über (nachinstallierte) stationäre Empfänger (im Gebäude) abgelesen werden. Die Koexistenz zweier Arten von Messgeräten für die Ablesung mit mobilen Empfängern bzw, mit stationären Empfängern kann auf eine universelle Datenauslesung zurückgeführt werden, ohne dass zusätzliche elektronische Bauteile bspw. zur Erhöhung der Sendeleistung vorgesehen werden müssen. Dies hilft Fertigungs- und Logistikkosten zu senken.

**Bezugszeichenliste:**

| | |
|---|---|
| 1 | Steuereinheit |
| 2 | Parallel-/Serienwandler |
| 3 | Kanalkodierer und Signalformer |
| 4 | Signalformer |
| 5 | Sequenzgenerator |
| 6 | Multipliziereinheit |
| 7 | Signalmultiplexer |
| 8 | Sender |
| 9 | Messwerteerfassung |
| 10 | Speicher |
| 11 | Empfänger |
| 12 | Multipliziereinheit |
| 13 | Integrator |
| 14 | Synchrondetektor |
| 15 | Schalter |
| 16 | Regenerator |
| 17 | Sequenzgenerator |
| 18 | Steuereinheit |
| 19 | Speichereinheit |

**Patentansprüche**

1. Verfahren zur Übertragung von Daten mit Datentelegrammen zum Empfang durch stationäre und mobile Empfänger (11), welche in mindestens zwei verschiedenen Sendemodi zeitversetzt durch den gleichen Sender (8) ausgesendet werden, von denen der erste Sendemodus für den stationären Empfang und der zweite Sendemodus für den mobilen Empfang vorgesehen ist, **dadurch gekennzeichnet, dass** der erste Sendemodus eine Kanalkodierung mit Spreizbandverfahren, bei dem ein Datenbit als bestimmte, fest vorgegebene Folge von mehreren Sendeschritttakten gesendet wird, und der zweite Sendemodus eine Kanalkodierung ohne Spreizbandverfahren verwendet, wobei beide Sendemodi einen identischen Sendeschritttakt, die gleiche Sendeleistung und die gleiche Sendefrequenz verwenden.

2. Verfahren nach Anspruch 1, **dadurch gekennzeichnet, dass** der zweite Sendemodus eine gleichspannungsfreie oder gleichspannungsarme Kanalkodierung verwendet, bei dem die Bit-Informationen auf so viele Schrittakte des Datentelegramms verteilt werden, dass ein in der Summe gleichspannungsfreies oder gleichspannungsarmes Signal erhalten wird.

3.  Verfahren nach einem der vorhergehenden Ansprüche, **dadurch gekennzeichnet, dass** verschiedene Sendemodi eine zeitlich gleiche Datentelegrammlänge aufweisen.

4.  Verfahren nach einem der vorhergehenden Ansprüche, **dadurch gekennzeichnet, dass** die zu übertragenden Daten in mehrere Datentelegramme einer vorgegebenen Datentelegrammsequenz aufgeteilt werden.

5.  Verfahren nach einem der vorhergehenden Ansprüche, **dadurch gekennzeichnet, dass** verschiedene Sendemodi zu verschiedenen Zeiten aktiviert und deaktiviert werden.

6.  Verfahren nach Anspruch 5, **dadurch gekennzeichnet, dass** die Aktivierung und Deaktivierung verschiedener Sendemodi nach einem Sendeschema erfolgt, bei dem ein sich zyklisch wiederholender Zeitabschnitt ($t_z$) in Unterabschnitte ($t_m$, $t_s$) aufgeteilt ist.

7.  Verfahren nach Anspruch 6, **dadurch gekennzeichnet, dass** zwischen den Unterabschnitten ($t_m$, $t_s$) sendefreie Pufferzeiten ($t_a$) liegen.

8.  Verfahren nach einem der Ansprüche 6 oder 7, **dadurch gekennzeichnet, dass** die Dauer eines Unterabschnitts ($t_m$, $t_s$) oder mehrerer Unterabschnitte ($t_m$, $t_s$) im Laufe der Zeit erhöht wird.

9.  Vorrichtung zur Übertragung von Daten mit einem Speicher (10), in welchem die zu übertragenden Daten gespeichert sind, einer Steuereinheit (1) zur Verarbeitung der Daten zu Datentelegrammen und einem Sender (8) zum zeitversetzten Senden der Datentelegramme in einem ersten Sendemodus für einen stationären Empfang und einen zweiten Sendemodus für einen mobilen Empfang, **dadurch gekennzeichnet, dass** die Vorrichtung, einen Kanalkodierer und Signalformer (3) für eine Kanalkodierung ohne Spreizbandverfahren, einen Signalformer (4) mit einem Sequenzgenerator (5) für eine Kanalkodierung mit Spreizbandverfahren, bei dem ein Datenbit als bestimmte, fest vorgegebene Folge von mehreren Sendeschritttakten gesendet wird, und einen von der Steuereinheit (1) gesteuerten Signalmultiplexer (7) aufweist, welcher die Kanalkodierung mit oder ohne Spreizung dem Sender (8) zuleitet, wobei der Sender (8) für beide Sendemodi einen identischen Sendeschritttakt, die gleiche Sendeleistung und die gleiche Sendefrequenz aufweist.

10. Vorrichtung nach Anspruch 9, **dadurch gekennzeichnet, dass** dem Kanalkodierer und Signalformer (3) ein Parallel-Serienwandler (2) vorgeschaltet ist.

11. Vorrichtung nach Anspruch 9 oder 10, **dadurch gekennzeichnet, dass** dem Signalformer (4) mit dem Sequenzgenerator (5) eine Multipliziereinheit (6) nachgeschaltet ist.

## Claims

1.  A process for transmitting data with data telegrams for receiving by means of stationary and mobile receivers (11), which data is transmitted in a deferred manner in at least two different transmittal modes by the same transmitter (8), of which the first transmittal mode is provided for the stationary reception and the second transmittal mode is provided for the mobile reception, **characterised in that** the first transmittal mode uses a channel coding having spread spectrum, in which a data bit is sent as a fixed predetermined sequence of several transmission signal element timings and a second transmittal mode uses a channel coding without spread spectrum, wherein both transmittal modes use an identical signal element timing, the same transmitting power and the same transmitting frequency.

2.  The process as specified in claim 1, **characterised in that** the second transmittal mode uses a DC-free or a DC-weak channel coding, in which the bit information is segmented in so many signal element timings of the data telegram, that a signal which is DC-free or DC-weak is received.

3.  The process as specified in one of the preceding claims, **characterised in that** different transmittal modes have an equal data telegram length of the same timing.

4. The process as specified in one of the previous claims, **characterised in that** the data to be transmitted is segmented into a plurality of data telegrams of a predetermined data telegram sequence.

5. The process as specified in one of the previous claims, **characterised in that** different transmittal modes are activated and deactivated at different times.

6. The process as specified in claim 5, **characterised in that** activation and deactivation of different transmittal modes occurs according to a transmitting plan, in which a cyclically repeating period ($t_z$) is segmented into subsections ($t_m$, $t_s$).

7. The process as specified in claim 6, **characterised in that** there are transmission-free buffer sections ($t_a$) between the subsections ($t_m$, $t_s$).

8. The process as specified in one of claims 6 or 7, **characterised in that** the duration of one subsection ($t_m$, $t_s$) or a plurality of subsections ($t_m$, $t_s$) is increased over the course of time.

9. A device for transmitting data, said device having a memory (10) in which the data to be transmitted are stored, a control unit (1) for processing the data into a data telegram, and a transmitter (8) for delayed transmission of the data telegrams in a first transmittal mode for a stationary reception and a second transmittal mode for a mobile reception, **characterised in that** the device has a channel coder and a signal conditioner (3) for a channel coding without spread spectrum, a signal conditioner (4) with a sequence generator (5) for a channel coding with spread spectrum, in which a data bit is transmitted as a fixed predetermined sequence of several transmission signal element timings and a signal multiplexer (7) controlled by the control unit (1), said signal multiplexer feeding the channel coding, with or without distribution, to the transmitter (8), wherein the transmitter (8) for both transmittal modes has an identical transmission signal element timing, the same transmitting power and the same transmitting frequency.

10. The device as specified in claim 9, **characterised in that** a series-parallel switch (2) is connected in incoming circuit to the channel coder and the signal conditioner (3).

11. The device as specified in claim 9 or 10, **characterised in that** a multiplying unit (6) is connected in outgoing circuit to the signal conditioner (4) with the sequence generator (5).

**Revendications**

1. Procédé pour la transmission de données avec des télégrammes de données pour la réception par des récepteurs (11) stationnaires et mobiles, qui sont émis dans au moins deux modes de transmission différents avec un décalage temporel grâce au même émetteur (8), desquels le premier mode de transmission est prévu pour la réception stationnaire et le deuxième mode de transmission pour la réception mobile, **caractérisé en ce que** un premier mode de transmission utilise un codage de canal avec un procédé d'étalement de bande, avec lequel un bit de donnée est transmis en tant que succession fixement prédéfinie de plusieurs rythmes d'intervalles élémentaires d'émission, et le deuxième mode de transmission utilisant un codage de canal sans procédé d'étalement de bande, les deux modes de transmission utilisant un rythme d'intervalle élémentaire d'émission identique, la même puissance de transmission et la même fréquence de transmission.

2. Procédé selon la revendication 1, **caractérisé en ce que** le deuxième mode de transmission utilise un codage de canal exempt de tension continue ou à faible tension continue, dans lequel les informations binaires sont réparties sur autant de rythmes d'intervalles élémentaires du télégramme de données qu'un signal exempt de tension continue ou à faible tension continue soit obtenu dans la somme.

3. Procédé selon l'une des revendications précédentes, **caractérisé en ce que** différents modes de transmission présentent une longueur de télégramme de données temporellement identique.

4. Procédé selon l'une des revendications précédentes, **caractérisé en ce que** les données à transmettre sont divisées en plusieurs télégrammes de données d'une séquence de télégramme de données prescrite.

5. Procédé selon l'une des revendications précédentes, **caractérisé en ce que** différents modes de transmission sont activés et désactivés à des moments différents.

6. Procédé selon la revendication 5, **caractérisé en ce que** l'activation et la désactivation de différents modes de transmission se fait selon un schéma de transmission, dans lequel une période ($t_z$) se répétant cycliquement est divisée en sous-périodes ($t_m$, $t_s$).

7. Procédé selon la revendication 6, **caractérisé en ce que** entre les sous-périodes ($t_m$, $t_s$) se trouvent des temps de réserve ($t_a$) exempts de transmission.

8. Procédé selon l'une des revendications 6 ou 7, **caractérisé en ce que** la durée d'une sous-période ($t_m$, $t_s$) ou de plusieurs sous-périodes ($t_m$, $t_s$) est augmentée au fil du temps.

9. Dispositif de transmission de données comportant une mémoire (10), dans laquelle les données à transmettre sont mémorisées, une unité de commande (1) pour traiter les données en télégramme de données et un émetteur (8) pour la transmission avec décalage temporel des télégrammes de données dans un premier mode de transmission en vue d'une réception stationnaire et dans un deuxième mode de transmission en vue d'une réception mobile, **caractérisé en ce que** le dispositif présente un codeur de canal et générateur de signaux (3) en vue d'un codage de canal sans procédé d'étalement de bande, un générateur de signaux (4) comportant un générateur de séquence (5) en vue d'un codage de canal avec procédé d'étalement de bande, avec lequel un bit de donnée est transmis en tant que succession fixement prédéfinie de plusieurs rythmes d'intervalles élémentaires de transmission, et un multiplexeur de signaux (7) commandé par l'unité de de commande (1), lequel amène le codage de canal avec ou sans étalement à l'émetteur (8), l'émetteur (8) présentant pour les deux modes de transmission un rythme d'intervalle élémentaire de transmission identique, la même puissance de transmission et la même fréquence de transmission.

10. Dispositif selon la revendication 9, **caractérisé en ce que** un transducteur en série-parallèle (2) est branché en amont du codeur de canal et générateur de signaux (3).

11. Dispositif selon la revendication 9 ou 10, **caractérisé en ce que** une unité de multiplicateur (6) est branchée en aval du générateur de signaux (4) avec le générateur de séquence (5).

Fig. 1

Fig. 2

| Nutzdatensignal NRZ | CDM-Signal mit 32 Chips/Bit |
|---|---|

s(t) = d(t)

s(l) = d(t)·c(t)

Spreizcode: N = 32 Chips / Datenbit

0 dB

20 log|S(f)|     B = 1

-10 dB     Rauschpegel

-20 dB

-30 dB
-32  -24  -16  -8  0  8  16  24  32

0 dB

20 log|S(f)|     Prozessgewinn
G = 10 log(N) = 15 dB

-10 dB     Rauschpegel

-20 dB

B = N = 32

-30 dB
-32  -24  -16  -8  0  8  16  24  32

**Fig. 3**

Autokorrelations- und Kreuzkorrelationsfunktion des 11-Chip-Barker-Kodes

11   f(t)

——— AKF
· · · KKF

-12 -11 -10 -9 -8 -7 -6 -5 -4 -3 -2 -1  0  1  2  3  4  5  6  7  8  9  10  11  12

t [Chips]

-11

**Fig. 4**

15

Fig. 5

EP 1 630 980 B2

| Zeitgebertoleranzen für: | ± ppm | ± mm:ss/Woche | |
|---|---|---|---|
| Sender | 20 ppm | 00:12,1 | t/Wo. |
| stationäre Empfänger | 5 ppm | 00:03,0 | t/Wo. |
| Summe Stationärempfang | 25 ppm | 00:15,1 | t/Wo. |

| | | Mo. - So. | | | | |
|---|---|---|---|---|---|---|
| Jahre | Wochen | $t_{ca}$ | $t_a$ | $t_s$ | $t_a$ | $t_z$ |
| 0 | 0 | 14:00:00 | 4:00:00 | 2:00:00 | 4:00:00 | 24:00:00 |
| 0 | 1 | 14:00:24 | 3:59:33 | 2:00:30 | 3:59:33 | 24:00:00 |
| 0 | 2 | 14:00:48 | 3:59:06 | 2:01:00 | 3:59:06 | 24:00:00 |
| 0 | 3 | 14:01:13 | 3:58:38 | 2:01:31 | 3:58:38 | 24:00:00 |
| 0 | 52 | 14:20:58 | 3:36:25 | 2:26:12 | 3:36:25 | 24:00:00 |
| 1 | 0 | 14:21:02 | 3:36:20 | 2:26:18 | 3:36:20 | 24:00:00 |
| 2 | 0 | 14:42:05 | 3:12:40 | 2:52:36 | 3:12:40 | 24:00:00 |
| 3 | 0 | 15:03:07 | 2:49:00 | 3:18:54 | 2:49:00 | 24:00:00 |
| 4 | 0 | 15:24:09 | 2:25:20 | 3:45:12 | 2:25:20 | 24:00:00 |
| 5 | 0 | 15:45:12 | 2:01:40 | 4:11:29 | 2:01:40 | 24:00:00 |
| 6 | 0 | 16:06:14 | 1:37:59 | 4:37:47 | 1:37:59 | 24:00:00 |
| 7 | 0 | 16:27:16 | 1:14:19 | 5:04:05 | 1:14:19 | 24:00:00 |
| 8 | 0 | 16:48:18 | 0:50:39 | 5:30:23 | 0:50:39 | 24:00:00 |
| 9 | 0 | 17:09:21 | 0:26:59 | 5:56:41 | 0:26:59 | 24:00:00 |
| 10 | 0 | 17:30:23 | 0:03:19 | 6:22:59 | 0:03:19 | 24:00:00 |

Fig. 6

17

| $t_a$ | 4:00:00 | Sendertoleranzen in ppm | | | | | | | | | |
|---|---|---|---|---|---|---|---|---|---|---|---|
| | | 5 | 10 | 15 | 20 | 25 | 30 | 35 | 40 | 45 | 50 |
| Empfängertoleranzen in ppm | 1 | 41,48 | 21,73 | 14,72 | 11,13 | 8,95 | 7,48 | 6,43 | 5,63 | 5,01 | 4,52 |
| | 2 | 38,03 | 20,74 | 14,26 | 10,86 | 8,78 | 7,36 | 6,34 | 5,56 | 4,96 | 4,47 |
| | 3 | 35,10 | 19,84 | 13,83 | 10,61 | 8,61 | 7,24 | 6,25 | 5,50 | 4,91 | 4,43 |
| | 4 | 32,59 | 19,01 | 13,42 | 10,37 | 8,45 | 7,13 | 6,17 | 5,43 | 4,85 | 4,39 |
| | 5 | 30,42 | 18,25 | 13,04 | 10,14 | 8,30 | 7,02 | 6,08 | 5,37 | 4,80 | 4,35 |
| | 6 | 28,52 | 17,55 | 12,68 | 9,92 | 8,15 | 6,91 | 6,00 | 5,31 | 4,75 | 4,30 |
| | 7 | 26,84 | 16,90 | 12,33 | 9,71 | 8,01 | 6,81 | 5,93 | 5,24 | 4,70 | 4,26 |
| | 8 | 25,35 | 16,30 | 12,01 | 9,51 | 7,87 | 6,71 | 5,85 | 5,19 | 4,66 | 4,23 |
| | 9 | 24,02 | 15,73 | 11,70 | 9,31 | 7,73 | 6,61 | 5,78 | 5,13 | 4,61 | 4,19 |
| | 10 | 22,82 | 15,21 | 11,41 | 9,13 | 7,61 | 6,52 | 5,70 | 5,07 | 4,56 | 4,15 |

Fig. 7

| $t_a$ | 7:00:00 | Sendertoleranzen in ppm | | | | | | | | | |
|---|---|---|---|---|---|---|---|---|---|---|---|
| | | 5 | 10 | 15 | 20 | 25 | 30 | 35 | 40 | 45 | 50 |
| Empfängertoleranzen in ppm | 1 | 72,59 | 38,03 | 25,76 | 19,48 | 15,66 | 13,09 | 11,25 | 9,86 | 8,78 | 7,91 |
| | 2 | 66,54 | 36,30 | 24,95 | 19,01 | 15,36 | 12,88 | 11,09 | 9,74 | 8,68 | 7,83 |
| | 3 | 61,43 | 34,72 | 24,20 | 18,57 | 15,07 | 12,68 | 10,94 | 9,62 | 8,59 | 7,75 |
| | 4 | 57,04 | 33,27 | 23,49 | 18,15 | 14,79 | 12,48 | 10,79 | 9,51 | 8,50 | 7,68 |
| | 5 | 53,24 | 31,94 | 22,82 | 17,75 | 14,52 | 12,29 | 10,65 | 9,39 | 8,41 | 7,61 |
| | 6 | 49,91 | 30,71 | 22,18 | 17,36 | 14,26 | 12,10 | 10,51 | 9,29 | 8,32 | 7,53 |
| | 7 | 46,97 | 29,58 | 21,58 | 16,99 | 14,01 | 11,92 | 10,37 | 9,18 | 8,23 | 7,46 |
| | 8 | 44,36 | 28,52 | 21,01 | 16,64 | 13,77 | 11,74 | 10,24 | 9,07 | 8,15 | 7,39 |
| | 9 | 42,03 | 27,54 | 20,48 | 16,30 | 13,53 | 11,57 | 10,11 | 8,97 | 8,07 | 7,33 |
| | 10 | 39,93 | 26,62 | 19,96 | 15,97 | 13,31 | 11,41 | 9,98 | 8,87 | 7,99 | 7,26 |

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10133367 C2
- WO 0148490 A2
- DE 10148275 A1
- DE 10309455